# FASCICULE DE BREVET EUROPEEN

(11) **EP 2 121 888 B1**
(45) Date de publication et mention de la délivrance du brevet: **22.04.2015**
(21) Numéro de dépôt: 08717316.7
(22) Date de dépôt: 03.03.2008
(51) Int. Cl.: C11D 1/90, A62D 1/00, C04B 38/10, C09K 8/70

(54) **UTILISATION D'UNE BETAÏNE A TITRE D'AGENT DE REDUCTION DU DRAINAGE DE LA MOUSSE**
VERWENDUNG EINES BETAINS ALS SCHAUMENTWÄSSERUNG VERMINDERNDES MITTEL
USE OF A BETAINE AS A FOAM DRAINAGE REDUCING AGENT

(30) Priorité: 08.03.2007 FR 0701696
(43) Date de publication de la demande: 25.11.2009
(73) Titulaire: Rhodia Operations, 933306 Aubervillers (FR)
(72) Inventeur: PRAT, Evelyne, F-93500 Pantin (FR); TOUZET, Sylvie, F-92160 Anthony (FR); DESCHASEAUX, Florence, F-75019 Paris (FR)
(74) Mandataire: Cardon, Flavie
(86) Numéro de dépôt international: PCT/EP2008/052553
(87) Numéro de publication internationale: WO 2008/110473

(56) Documents cités:
- EP-A- 0 373 851
- EP-A- 0 573 118
- WO-A-92/14907
- FR-A- 2 114 752
- US-A1- 2004 121 917
- E.S. BASHEVA ET AL.: "Role of Betaine as Foam Booster in the Presence of Silicone Oil Drops" LANGMUIR, [Online] vol. 16, no. 3, 30 septembre 1999 (1999-09-30), pages 1000-1013, XP002455707 Extrait de l'Internet: URL:pubs.acs.org/cgi-bin/abstract.cgi/lang d5/2000/16/i03/abs/la990777+.html> [extrait le 2007-10-17]

## Description

La présente invention a pour objet l'utilisation d'une bétaïne à titre d'agent de réduction du drainage de la mousse. La présente invention a également pour objet la mise en oeuvre de la bétaïne dans des procédés impliquant la présence de mousse.

Certains processus industriels où opérés dans le domaine privé mettent en oeuvre des mousses. Dans certaines compositions détergentes la mousse est un signal apprécié du consommateur d'un bon pouvoir nettoyant. Dans ces compositions la mousse permet également de mettre en suspension les souillures nettoyées et ainsi de les séparer de l'objet nettoyé ou de la surface nettoyée. Des mousses sont également utilisées dans des produits d'extinction du feu. Des mousses sont également utilisées pour générer des matériaux légers et/ou poreux: le matériau durcit à partir de la composition formant les parois des bulles, ce qui conduit à une structure comprenant des pores correspondant aux bulles. Des mousses sont également utilisées pour suspendre et transporter des déblais dans des opérations de constructions, dans le domaine du bâtiment et des travaux publics, notamment dans des opérations d'excavation et/ou de perçage de tunnels. La mousse est également utilisée comme marqueur visuel sur des terrains. Des mousses sont également utilisées dans le traitement de l'eau comme agent de dépollution pour enlever des particules ou salissures.

La présence de bétaïnes dans des compositions moussantes est connue de Langmuir 2000, 16, pages 1000-1013 et US 2004/121917 A1.

Il existe de nombreux agents susceptibles de générer de la mousse. Parmi ceux-ci les plus utilisés sont des tensioactifs anioniques notamment des alkyle ether sulfates, qui présentent un pouvoir détergent utile et génèrent une mousse appréciée. Un tensioactif zwitterionique, la cocoamidopropyldiméthylbétaïne, est également connu, et d'utilisation répandue.

Afin d'augmenter le volume de mousse, de nombreux composés "tonifiant de mousse" ("foam boosters" en anglais) ont été décrits, notamment des polymères. De tels polymères sont notamment utilisés dans des compositions de lavage de la vaisselle à la main.

Les processus décrits ci-dessus peuvent nécessiter une durée de vie de la mousse relativement importante, sans quoi les opérations et phénomènes ne peuvent pas être menés à leur terme, ou voient leur efficacité diminuée. Par exemple dans la génération d'un matériau léger, la mousse doit rester présente le temps du durcissement. Plus la mousse draine tôt, moins il y aura de pores induisant la légèreté et/ou la porosité recherchée. Dans les opérations d'excavation, plus la mousse disparaît tôt, moins il y aura de matière évacuée.

Il existe un besoin pour des mousses à drainage diminué, c'est-à-dire des mousses dont la teneur en eau est maintenue élevée plus longtemps et/ou conservant un certain volume de mousse pendant plus de temps. Le maintient de la teneur élevée en eau a pour conséquence, par exemple une durabilité élevée des propriétés, notamment mécaniques et/ou la conservation de la forme des bulles et/ou de l'homogénéité. Il existe un besoin d'agents à cet effet.

L'invention répond. à ce besoin en proposant l'utilisation dans une composition aqueuse moussante comprenant un agent moussant, comme agent de réduction du drainage de la mousse, d'un tensioactif bétaïne choisi parmi les suivants:
- les alkylbétaïne de formule (I) suivante:

   R¹-N⁺R²R³-CH₂-COO⁻ (I)
- les alkylamidoalkylbétaïne de formule (II) suivante:

   R'¹-CO-NH-R₄-N⁺R²R³-CH₂-COO⁻ (II),

   et
- leurs mélanges et associations,
où:
- R¹ représente un groupe alkyle, linéaire ou branché, saturé ou insaturé, comprenant de 16 à 24 atomes de carbone,
- R'¹ représente un groupe alkyle, linéaire ou branché, saturé ou insaturé, comprenant de 15 à 22 atomes de carbone,
- R⁴ représente un groupe alkyle divalent en C1-C4, le cas échéant substitué par un groupe hydroxyle,
- R² et R³, identiques ou différents, représentent un groupe alkyle en C₁-C₂, le cas échéant substitué par un groupe hydroxyle.

Le tensioactif décrit ci-dessus est par la suite dénommé "agent de l'invention" ou "tensioactif bétaïne". L'ensemble de l'agent moussant et du tensioactif bétaïne est par la suite dénommé "système de l'invention".

L'invention concerne également un procédé de préparation- de mousse dans lequel on fait mousser, par exemple par agitation et/ou par propulsion à l'aide d'un gaz, une composition aqueuse comprenant un agent moussant et l'agent de l'invention.

L'invention concerne également des processus comprenant une étape de préparation de mousse et une autre étape, simultanée ou subséquente. Il peut s'agir de processus industriels ou opérés dans le domaine privé. L'intérêt est particulièrement marqué dans le cadre de processus industriels.

L'invention permet notamment:
- de conserver la mousse plus longtemps,
- de conserver la mousse autant de temps, mais avec des quantités moindres d'agents, ce qui est économique et/ou bénéfique pour l'environnement, ou au moins perçu comme tel,
- de conserver plus longtemps l'homogénéité de la mousse
- de faciliter l'obtention de faible drainages, sur des gammes de compositions larges, et/ou
- d'avoir une présence d'une quantité de mousse, cumulée dans le temps, plus importante.

Par drainage on entend l'écoulement de l'eau contenue dans la mousse, pouvant conduire à la dégradation des parois des bulles et finalement au retour progressif à l'état de composition aqueuse exempte de bulles.

La mise en oeuvre du système de l'invention est particulièrement pratique et aisée.

### Composition et agent l'invention

La composition est une composition aqueuse comprenant un agent moussant et l'agent de l'invention. L'agent moussant présente la faculté de générer de la mousse. De tels agents sont connus. La mousse peut être générée par toute méthode classique, notamment par agitation, détente, mise en oeuvre d'un gaz propulseur, mise en oeuvre d'un dispositif aérosol etc... L'agent de l'invention diminue le drainage, par rapport au drainage obtenu avec l'agent moussant seul. Il s'agit donc d'un agent de réduction du drainage. Il n'est pas exclu que l'agent de l'invention contribue à générer de la mousse. Ce n'est toutefois pas sa fonction principale dans le système de l'invention.

L'agent moussant est un composé (ou une association de composés) différent du tensioactif bétaïne.

Les agents moussants sont connus de l'homme du métier. Il peut notamment s'agir de tensioactifs anioniques, non ioniques, amphotères (dont les tensioactifs zwitterioniques différents du tensioactif bétaïnes), cationiques, ou de leurs mélanges et associations.

A titre d'exemple d'agent moussant tensioactif anionique, on peut mentionner en particulier
- les alkylesters sulfonates de formule R-CH(SO₃M)-COOR', où R représente un radical alkyle en C₈₋₂₀, de préférence en C₁₀-C₁₆, R' un radical alkyle en C₁-C₆, de préférence en C₁-C₃ et M un cation alcalin (sodium, potassium, lithium), ammonium substitué ou non substitué (méthyl-, diméthyl-, triméthyl-, tetraméthylammonium, diméthylpiperidinium ...) ou dérivé d'une alcanolamine (monoéthanolamine, diéthanolamine, triéthanolamine ...). On peut citer tout particulièrement les méthyl ester sulfonates dont les radical R est en C₁₄-C₁₆ ;
- les sulfonates d'alpha-olélfines comprenant de 12 à 16 atomes de carbone
- les alkylsulfates et alkylethersulfates, de formule ROSO₃M, où R représente un radical alkyle ou hydroxyalkyle en C₅-C₂₄, de préférence en C₁₀-C₁₈, M représentant un atome d'hydrogène ou un cation de même définition que ci-dessus, ainsi que leurs dérivés éthoxylénés (OE) et/ou propoxylénés (OP), présentant en moyenne de 0,5 à 30 motifs, de préférence de 0,5 à 10 motifs OE et/ou OP. On cite en particulier le dodecyle sulfate de sodium (SDS) ou d'ammonium , et les lauryle ether sulfates de sodium (SLES) ou d'ammonium.
- les alkylamides sulfates de formule RCONHR'OSO₃M où R représente un radical alkyle en C₂-C₂₂, de préférence en G₆-C₂₀, R' un radical alkyle en C₂-C₃, M représentant un atome d'hydrogène ou un cation de même définition que ci-dessus, ainsi que leurs dérivés éthoxylénés (OE) et/ou propoxylénés (OP), présentant en moyenne de 0,5 à 60 motifs OE et/ou OP ;
- les sels d'acides gras saturés ou insaturés en C₈-C₂₄, de préférence en C₁₄-C₂₀, les alkylbenzènesulfonates en C₉-C₂₀, les alkylsulfonates primaires ou secondaires en C₈-C₂₂, les alkylglycérol sulfonates, les acides polycarboxyliques sulfonés décrits dans GB-A-1 082 179, les sulfonates de paraffine, les N-acyl N-alkyltaurates, les alkylphosphates, les iséthionates, les alkylsuccinamates les alkylsulfosuccinates, les monoesters ou diesters de sulfosuccinates, les N-acyl sarcosinates, les sulfates d'alkylglycosides, les polyéthoxycarboxylates, le cation étant un métal alcalin (sodium, potassium, lithium), un reste ammonium substitué ou non substitué (méthyl-, diméthyl-, triméthyl-, tetraméthylammonium, diméthylpiperidinium ...) ou dérivé d'une alcanolamine (monoéthanolamine, diéthanolamine, triéthanolamine ...);
- les phosphates esters alkylés ou alkylarylés comme les RHODAFAC RA600, RHODAFAC PA15 ou RHODAFAC PA23 commercialisés par la société RHODIA.
La quantité, exprimée en sec, d'agent tensioactif anionique (lorsqu'il est présent) peut aller de 0,5 à 90 parties, de préférence de 5 à 60 parties, plus particulièrement de 10 à 30 parties en poids pour 100 parties en poids total de composition détergente.

Parmi les agents moussants tensioactifs non ioniques, on peut citer en particulier les condensats d'oxyde d'alkylène, notamment d'oxyde d'éthylène avec des alcools, des polyols, des alkylphénols ; des esters d'acides gras ; des amides d'acides gras ; des amines grasses ; les dérivés de sucre tels que les alkylpolyglycosides ou les esters d'acides gras et de sucres, notamment le monopalmitate de saccharose ; les oxydes de phosphine tertiaire à longue chaîne ; les dialkylsulfoxydes ; les copolymères séquencés de polyoxyéthylène et de polyoxypropylène ; les esters de sorbitane polyalkoxylés ; les esters gras de sorbitane, les poly(oxyde d'éthylène) et amides d'acides gras modifiés de manière à leur conférer un caractère hydrophobe (par exemple, les mono- et diéthanolamides d'acides gras contenant de 10 à 18 atomes de carbone).

On peut citer tout notamment
- les alkylphénols polyoxyalkylénés (polyéthoxyéthylénés, polyoxypropylénés, polyoxybutylénés) dont le substituant alkyle est en C₆-C₁₂ et contenant de 5 à 25 motifs oxyalkylènes ; à titre d'exemple, on peut citer les TRITON X-45, X-114, X-100 ou X-102 commercialisés par Rohm & Haas Cy. ;
- les glucosamides, glucamides, glycérolamides ;
   - les alcools aliphatiques en C₈-C₂₂ polyoxyalkylénés contenant de 1 à 25 motifs oxyalkylènes (oxyéthylène, oxypropylène). A titre d'exemple, on peut citer les TERGITOL 15-S-9, TERGITOL 24-L-6 NMW commercialisés par Union Carbide Corp., NEODOL 45-9, NEODOL 23-65, NEODOL 45-7, NEODOL 45-4 commercialisés par Shell Chemical Cy., les RHODASURF IDO60, RHODASURF LA90, RHODASURF IT070 commercialisés par la société RHODIA,
- les alkylpolyglycosides décrits dans US-A-4 565 647 ;
- les amides d'acides gras en C₈-C₂₀ éventuellement polyhydroxylés
- les acides gras éthoxylés
- les amines éthoxylées

A titre d'agents moussants tensioactifs amphotères ou zwitterioniques on peut notamment citer:
- les oxydes d'amines tels que les oxydes d'alkyl C₁₀-C₁₈ diméthylamines, les oxydes d'alkoxy C₈-C₂₂ éthyl dihydroxy éthylamines ;
- les dérivés d'ammoniums quaternaires aliphatiques, notamment le 3-(N,N-diméthyl-N-hexadecylammonio)propane-1-sulfonate et le 3-(N,N-diméthyl-N-hexadecyl-ammonio)2-hydroxypropane 1-sulfonate
- les bétaïnes différentes des agents de l'invention, les sulfobétaïnes et les carboxylates et sulfonates d'acides gras et d'imidazole
- les alkylamidopropyldiméthyl-sulfobétaïnes comme le MIRATAINE CBS commercialisé par la société RHODIA,
- les produits de condensation d'acides gras et d'hydrolysats de protéines
- les alkyldiméthylsulfobétaïnes
- les alkylamphoacétates ou alkylamphodiacétates dont le groupe alkyle contient de 6 à 20 atomes de carbone
- les dérivés amphotères des alkylpolyamines comme l'AMPHIONIC XL^{®} commercialisé par RHODIA, AMPHOLAC 7T/X^{®} et AMPHOLAC 7C/X^{®} commercialisés par BEROL NOBEL

A titre d'agents moussants tensioactifs cationiques on peut notamment citer:
- les sels d'alkylammonium de formule R¹R²R³R⁴N⁺X⁻ où
   - X⁻ représente un ion halogène, CH₃SO₄⁻ ou C₂H₅SO₄⁻
   - R¹ et R² sont semblables ou différents et représentent un radical alkyl en C₁-C₂₀, un radical aryl ou benzyl
   - R³ et R⁴ sont semblables ou différents et représentent un radical alkyl en C₁-C₂₀, un radical aryl ou benzyl ou un condensat oxyde d'éthylène et/ou de propylène (CH₂CH₂O)ₓ-(CH₂CHCH₃O)y-H, où x et y vont de 0 à 30 et ne sont jamais nuls ensemble,
- notamment le bromure de cétyltrimethylammonium, le RHODAQUAT® TFR commercialisé par la société RHODIA.

Le rapport en poids entre le tensioactif bétaïne et l'agent moussant peut notamment être supérieur ou égal à 0,4, de préférence à 0,7, de préférence à 1, de préférence à 2.

Le rapport en poids entre le tensioactif bétaïne et l'agent moussant peut notamment être inférieur ou égal à 10, de préférence à 4, de préférence à 3, de préférence à 2.

La composition peut notamment comprendre de 0,05 à 5%, de préférence de 0,1 à 2%, de préférence de 0,15 à 1,5%, de préférence de 0,2 à 0,7%, en poids, de l'agent moussant et du tensioactif bétaïne (il s'agit de la teneur en poids du système de l'invention), tout en respectant de préférence les rapports indiqués ci-dessus.

La composition peut notamment comprendre de 0,05 à 2%, de préférence de 0,1 à 1%, de préférence de 0,15 à 0,7%, en poids, du tensioactif bétaïne, tout en respectant de préférence les rapports indiqués ci-dessus.

La composition peut notamment comprendre de 0,1 à 3%, de préférence de 0,15 à 1,5%, de préférence de 0,2 à 1%, en poids, de l'agent moussant, tout en respectant de préférence les rapports indiqués ci-dessus.

De préférence, dans l'agent de l'invention:
- R² et R³ sont des groupes méthyle, et
- R⁴ est le groupe -CH₂-CH₂-CH₂-.

Avantageusement:
- R¹ représente un groupe alkyle, linéaire ou branché, saturé ou insaturé, comprenant de 18 à 22 atomes de carbone, ou
- R'¹ représente un groupe alkyle, linéaire ou branché, saturé ou insaturé, comprenant de 17 à 21 atomes de carbone.

De préférence:
- R¹ représente un groupe alkyle, linéaire ou branché, saturé ou insaturé, comprenant 18 atomes de carbone, ou
- R'¹ représente un groupe alkyle, linéaire ou branché, saturé ou insaturé, comprenant 17 atomes de carbone.

On mentionne que les groupes R¹ et R'¹ peuvent correspondre à des restes d'acides gras, généralement d'origine naturelle, le plus souvent végétale. L'acide gras auquel correspond R'¹ est l'acide gras de formule R'¹-COOH. L'acide gras auquel correspond R¹ est l'acide gras présentant le même nombre d'atomes de carbone. Ainsi le groupe R'¹ peut correspondre à un acide gras linéaire ou branché, saturé ou insaturé; comprenant de 15 à 23, de préférence de 17 à 21, de préférence 17 atomes de carbone. Le groupe R¹ peut correspondre à un acide gras linéaire ou branché, saturé ou insaturé, comprenant de 16 à 24, de préférence de 18 à 22, de préférence 18, atomes de carbone. Il est usuel d'assimiler les groupes R¹ et R'¹ à l'acide gras auquel ils correspondent.

Ces acides gras et groupes sont connus. Il s'agit en général de dérivés d'huiles végétales. Ils peuvent être présents en mélanges. S'il s'agit de mélanges, entrent dans la définition l'ensemble des groupes (ou des acides gras correspondant), quel que soit le nombre d'atomes de carbone, si le groupe (ou l'acide correspondant) majoritaire en poids (majorité relative, de préférence absolue, de préférence à au moins 75%) correspond à la définition. Il est fréquent de réduire la dénomination au groupe (ou de l'acide correspondant) au groupe (ou à l'acide) majoritaire.

Les groupes R¹ et R'¹ peuvent notamment correspondre à des acides gras en C₁₈ ou C₂₂, comme les acides stéarique, oléïque, ou érucique. De préférence ils correspondent à un groupe oléyle.

Des associations du tensioactif bétaïne et d'un agent moussant du type alkylsulfate et alkyle ether sulfate s'avèrent particulièrement efficaces pour la réduction du drainage:

La composition peut comprendre toutes sortes d'ingrédients supplémentaires, en fonction de sa destination et de son utilisation.

L'eau de la composition présenté de préférence une dureté modérée, de préférence de dureté allant de 5 à 100 °TH, par exemple de 20 à 60. De telles conditions peuvent améliorer la réduction du drainage.

Le pH de la composition peut être varié. Il peut être contrôlé à l'aide d'agents connus. Le pH peut notamment être supérieur ou égal à 4 ou à 5, de préférence supérieur ou égal à 7, par exemple de 8-9 à 11-12. Des pH élévés peuvent améliorer la réduction du drainage.

La composition, et les processus dans lesquels elle est mise en oeuvre, peut être de température variée. Elle est par exemple comprise entre 20°C et 80°C, de préférence entre 20°C et 40°C ou entre 40 et 80°C. Des températures modérées peuvent améliorer la déduction du drainage. L'invention permet notamment de conserver un faible drainage à des températures relativement importantes, par exemple entre 40°C et 80°C, ce qui la rend particulièrement utile et avantageuse dans certains processus opérés à relativement hautes températures.

La composition peut être préparée par simple mélange d'eau, de l'agent moussant, de l'agent de l'invention, et d'éventuellement d'autres ingrédients. Selon un mode particulier, l'agent moussant et l'agent de l'invention sont pré-mélangés, sous forme d'une composition dite composition concentrée, solide ou liquide. La composition concentrée peut par exemple comprendre au moins 2% en poids, de préférence au moins 5%, par exemple au moins 10%, du système de l'invention. La composition concentrée peut être diluée par la suite, par exemple juste avant de générer la mousse, et/ou avant ou pendant l'adjonction d'autres ingrédients. La mise en oeuvre de compositions concentrées est particulièrement simple pour l'utilisateur, et procure de bons effets de réduction du drainage.

### Utilisations et processus

La composition moussante peut notamment être:
- une composition comprenant un liant hydraulique,
- une composition pour la fabrication de céramiques, pouvant notamment comprendre une barbotine,
- un fluide de forage,
- une composition comprenant des composés susceptibles de générer un matériau polymérique réticulé,
- une composition de marquage de terrain,
- une composition d'extinction de feux,
- une composition de dépollution des eaux,
- une composition de bain moussant, ou
- une composition détergente.

De telles compositions sont connues de l'homme du métier. Elles comprennent le plus souvent des composés supplémentaires, en plus des agents de l'invention. Ceux-ci sont connus de l'homme du métier. Des processus mettant en oeuvre des mousses avec de telles compositions sont connus de l'homme du métier.

Pour les compositions comprenant un liant hydraulique, il peut notamment s'agir de compositions cimentaires ou de compositions de plâtre pour l'obtention d'un matériau poreux et/ou léger et/ou réfractaire et/ou isolant, par exemple un matériau pour l'isolation thermique et/ou acoustique. L'agent de l'invention peut notamment être utilisé dans un processus (de type industriel généralement) où on fait mousser la composition à liant hydraulique, puis on laisse la composition durcir sous forme de mousse, pour obtenir le matériau. Un autre processus peut être de préparer une dispersion du liant dans de l'eau d'y incorporer une mousse obtenue à l'aide du système de l'invention, puis de laisse la composition durcir. De tels processus peuvent notamment être mis en oeuvre pour l'obtention de matériaux pré-fabriqués, comme des éléments de construction pré-fabriqués.

Il en est de même pour les compositions susceptibles de générer un matériau polymérique éventuellement réticulé, le liant hydraulique étant remplacé par un polymère, pouvant le cas échéant réticuler au contact de l'air ambiant, ou par un système chimique à plusieurs composés comprenant au moins un polymère ou oligomère, ledit système pouvant éventuellement réticuler lorsque les plusieurs composés sont mis en contact, le cas échéant sous l'action d'un contact de l'air ambiant. Les compositions susceptibles de générer un matériau polymérique peuvent par exemple être des compositions à base de latex pour l'adjonction à des produits fibreux, par exemples de contre-couches de tapis ("carpet backing" en anglais) et/ou de surfaces non tissées. Les compositions susceptibles de générer un matériau polymérique peuvent aussi être utilisées dans l'industrie papetière.

L'invention peut conférer aux matériaux à liant hydraulique ou à base polymérique, une bonne uniformité.

Pour les compositions pour la fabrication de céramiques poreuses (par exemple à base d'oxydes), il peut notamment s'agir de compositions comprenant une barbotine. L'agent de l'invention peut notamment être utilisé dans un processus où on introduit la mousse dans la barbotine (composition à base d'eau et de précurseur de céramique) de manière à obtenir une pièce poreuse à cru manipulable qui est ensuite soumise à un profil de température dans un four de manière à obtenir une pièce poreuse par frittage des oxydes à haute température.

Pour les fluides de forage, il peut s'agir de fluides d'excavation de déblais mis en oeuvre dans des opérations de percement de tunnels, ou dans des opérations de creusement de puits, avant cimentation du puits. L'agent de l'invention peut notamment être utilisé dans un processus (de type industriel généralement) où on fait mousser la composition, on l'injecte au niveau d'un outil de percement ou de creusement, comme un tunnelier, et on évacue la mousse portant (généralement) des déblais hors de la zone de contact de l'outil et de la roche percée ou creusée. La mousse permet notamment d'éviter des effondrements de la roche, d'évacuer les déblais, de fluidifier la roche percée ou creusée, de l'homogénéiser, et/ou de l'imperméabiliser localement et le cas échéant temporairement.

Pour les compositions d'extinction des feux, il peut notamment s'agir de compositions d'extincteurs ou de compositions mises en oeuvre dans les systèmes de sécurité des bâtiments. L'invention procuré des mousses ayant une bonne résistance à la chaleur, ce qui en rend l'utilisation particulièrement appropriée dans le cadre de l'extinction des feux. Il peut s'agir d'éteindre des feux survenant dans des bâtiments et/ou dans les forêts ou exploitations agricoles, et/ou des feux liés à la combustion d'hydrocarbures par exemples lors d'incendies involontaires ou criminels d'installation d'extraction, de stockage ou de transport de pétrole et/ou de gaz.

Pour les compositions détergentes, il peut s'agir de compositions de nettoyage à la main de la vaisselle, de shampoings ou gels-douche pour le corps et les cheveux, de savons liquidés pour le lavage des mains, de compositions le lavage du linge à la main ou en machine semi automatique, de formulations détergentes pour le lavage de véhicules comme des voitures et des camions, de compositions pour le nettoyage ménager ou industriel des surfaces, où il peut être intéressant que la mousse ait un temps de vie suffisant pour permettre une action nettoyante (par exemple pour le nettoyage des toilettes). Dans ces compositions l'invention peut procurer par la présence de mousse un signal visuel d'une couverture complète dé l'objet ou de la partie de l'objet à être nettoyé. L'agent de l'invention peut notamment être utilisé dans un processus (opéré dans le domaine privé généralement) où on dilue la composition et on la fait mousser (par agitation, souvent générée par le mouvement des mains ou par un jet d'eau de dilution), et on met en contact la vaisselle sale avec la composition diluée et présentant de la mousse.

Un processus impliquant un marquage de terrain comprend une étape de génération de mousse, et une étape où la mousse est laissée sur le terrain pour le marquer. Plus la mousse dure, plus le marquage est persistant. On peut laisser la mousse sur le terrain en la projetant d'un aéronef, un avion par exemple. Ceci peut être utilisé dans le domaine militaire pour identifier des zones d'opérations, ou dans le domaine agricole, pour identifier des zones de traitement.

D'autres détails ou avantages de l'invention pourront apparaître au vu des exemples qui suivent sans caractère limitatif.

### EXEMPLES 1 à 20

### Produits utilisés

- Mirataine BET C30, Rhodia ("BET C30"): cocoamidopropyldimethyl bétaïne
- EMPICO-L ESB3M, Hunstman ("SLES"): sodium laurylethersulfate - Matière active 27%
- SDS: sodium dodécyl sulfate
- Miranol C2M Conc. NP, Rhodia ("C2M"): Nom INCI "Disodium cocoamphoacetate" - Matière active 50%
- Mirataine BET O-30, Rhodia ("BET O30"): oleamidopropyldiméthyl bétaïne
- Mackam OB-30, Mclntyre ("OB30"): oleyldiméthyl bétaïne
- Mirataine BET E-40, Rhodia ("BET E40"): Mélange comprenant de l'érucylamidopropyldiméthyl bétaïne (40% en poids de matière active) et 20% en poids d'isopropanol.
- Mélange 1: Mélange de Mirataine BET E-40 et 10% en poids de chlorure de benzyltriméthylammonium.
- Eau: eau du robinet ("eau de ville") d'Aubervilliers, France, Décembre 2007 (dureté d'enviroon 30°TH).

### Matériel utilisé

Agitateur Raynery
Hélice à 3 pales
Bécher en plastique de 2 L diamètre 14,5cm
Cône en verre

### Mise en oeuvre de l'essai de drainage

Le drainage est caractérisé par le temps de demi-vie de la mousse (en volume). Plus le temps de demi-vie est élevé, plus le drainage est faible. On procède comme suit:
1- Préparation de 200 ml de composition par mélange des ingrédients (compositions données ci-après), le cas échéant à chaud (80°C). Les compositions sont données ci-dessous: quantité dès ingrédients en matière active, le reste étant l'eau.
2- Moussage
   Agitation de la composition dans un bécher de 2 litres avec une hélice à 3 pale à 2000 tr/min pendant 5 min. On note le volume de mousse produit.
3- Suivi du drainage dans un cône de 1 litre jusqu'à ce que la mousse relargue 100 ml d'eau (temps de ½ vie car c'est la moitié de la composition initiale utilisée pour faire la mousse).

On définit le facteur d'amélioration du drainage F_{additif} comme le rapport entre le temps de ½ vie obtenu avec l'association de l'agent moussant et le composé testé, et le temps de ½ pour avec l'agent moussant seul. Un facteur de 1 n'apporte aucune amélioration. Plus F_{addtif} est élevé, plus le drainage est réduit. Un facteur supérieur à 1,75 représente une amélioration intéressante du drainage, supérieure à 75%.

Dans les exemples, la lettre C indique un exemple comparatif.

Les résultats sont reportés dans le tableau I.IIs montrent que les agents que les agents de l'inventions procurent une importante réduction du drainage, sur une gamme élevée de compositions, ce qui en rend l'utilisation pratique.

**Tableau I**

| **Exemple** | **Agent moussant** | | **Additif testé** | | **Ratio moussant / additif** | **Quantité totale du système** | **T 1/2 vie** | **T 1/2 vie (s)** | **F_{additif}** |
|---|---|---|---|---|---|---|---|---|---|
| | Nature | Quantité | Nature | Quantité | | | | | |
| 1C | SLES | 0,24 % | / | / | | 0,24 % | 6 min (360 s) | 360 | 1 |
| 2C | SLES | 0,42 % | / | / | | 0,42 % | 7 min 19s (439 s) | 439 | 1 |
| 3C | SLES | 0,96 % | / | / | | 0,0096 | 7 min 10s (430 s) | 430 | 1 |
| 4 | SLES | 0,24 % | BET E40 | 0.18 % | 0,75 | 0,42 % | 11 min 9 s. | 669 | 1,85 |
| 5 | SLES | 0,24 % | BET E40 | 0,72 % | 3 | 0,96 % | 11min 54s | 714 | 1,98 |
| 6 | SLES | 0,315 % | BET E40 | 0,105 % | 0,34 | 0,42 % | 8 min 30 s | 510 | / |
| 7 | SLES | 0,24 % | BET 030 | 0,18 % | 0,75 | 0,42 % | 28 min | 1680 | 4,6 |
| 8 | SLES | 0,24 % | BET 030 | 0,72 % | 3 | 0,96 % | > 18 h | 64800 | 180 |
| 9 | SLES | 0,315 % | BET O30 | 0,105 % | 0,34 | 0,42 % | 9min 23s | 653 | / |
| 10 | SLES | 0.0072 | BET O30 | 0.24 % | 0,34 | 0,96 % | 8min 24 s | 504 | / |
| 11C | SLES | 0,24 % | BET C30 | 0,18 % | 0,75 | 0,42 % | 9 min 30 s | 570 | 1,58 |
| 12C | SLES | 0,24 % | BET C30 | 0,72 % | 3 | 0,96 % | 11min 54s | 714 | 1,98 |
| 13C | SLES | 0,72 % | BET C30 | 0,24 % | 0,34 | 0,96 % | 9min | 540 | 1,25 |
| 14C | SLES | 0,24 % | C2M | 0,18 % | 0,75 | 0,42 % | 10 min 8 s | 609 | 1,69 |
| 15 | SLES | 0,24 % | OB30 | 0,18 % | 0,75 | 0,42 % | 10 min 30 s | 630 | 1,75 |
| 16 | SLES | 0,24 % | OB30 | 0,72 % | 3 | 0,96 % | 11min | 660 | 7,83 |
| 17 | SDS | 0,42 % | / | / | | 0,42 % | 7min 30s | 450 | 1 |
| 18 | SDS | 0,24 % | BET E40 | 0,18 % | 0,75 | 0,42 % | 20min | 1200 | / |
| 19 | SDS | 0,24 % | BET O30 | 0,18 % | 0,75 | 0,42% | 27min25 | 1645 | / |
| 20 | SDS | 0,24 % | BET O30 | 0,72 | 3 | 0,96 | 30min14s | 1814 | / |

### EXEMPLE 21 - Préparation d'un plâtre poreux

On prépare une mousse en agitant, cinq minutes à 2000 tr/min avec une pale défloculeuse, une composition aqueuse comprenant 0,24% en poids de SLES et 0,72% en poids de Mirataine BET 030 dans de l'eau de ville.

Puis on prépare une dispersion dans l'eau de plâtre (Lutece® Express, commercialisé par Placoplatre ou BPB Placo) en ajoutant 100 grammes de plâtre à 80 grammes d'eau agitée par une pale défloculeuse tournant à 200 tr/min. Quand la dispersion est homogène, on y incorpore 12,5 grammes de mousse.

La composition est donc la suivante :
- plâtre 100 g
- eau 92,38 g
- SLES 0,03 g
- Mirataine BET 030 0,09g

Après la prise, on obtient un plâtre de densité comprise entre 0,45 et 0,5 avec une porosité homogène et uniforme.

## Revendications

1. Utilisation dans une composition aqueuse moussante comprenant un agent moussant, comme agent de réduction du drainage de la mousse, d'un tensioactif bétaïne choisi parmi les suivants:
- les alkylbétaïne de formule (I) suivante:
R¹-N⁺R²R³-CH₂-COO⁻ (I)
- les alkylamidoalkylbétaïne de formule (II) suivante:
R'¹-CO-NH-R₄-N⁺R²R³-CH₂-COO- (II),
et
- leurs mélanges et associations,
où:
- R¹ représente un groupe alkyle, linéaire ou branché, saturé ou insaturé, comprenant de 16 à 24 atomes de carbone,
- R'¹ représente un groupe alkyle, linéaire ou branché, saturé ou insaturé, comprenant de 15 à 22 atomes de carbone,
- R⁴ représente un groupe alkyle divalent en C1-C4, le cas échéant substitué par un groupe hydroxyle,
- R² et R³, identiques ou différents, représentent un groupe alkyle en C₁-C₂, le cas échéant substitué par un groupe hydroxyle.

2. Utilisation selon la revendication 1, **caractérisée en ce que** le rapport en poids entre le tensioactif bétaïne et l'agent moussant est supérieur ou égal à 0,4, de préférence à 0,7, de préférence à 1, de préférence à 2.

3. Utilisation selon l'une des revendications précédentes, **caractérisée en ce que** le rapport en poids entre le tensioactif bétaïne et l'agent moussant inférieur ou égal à 10, de préférence à 5, de préférence à 4, de préférence à 2.

4. Utilisation selon l'une des revendications précédentes, **caractérisée en ce que** la composition comprend de 0,05 à 5%, de préférence de 0,1 à 2%, de préférence de 0,15 à 1,5%, de préférence de 0,2 à 0,7%, en poids de l'agent moussant et du tensioactif bétaïne.

5. Utilisation selon l'une des revendications précédentes, **caractérisé en ce que** la composition comprend de 0,05 à 2%, de préférence de 0,1 à 1%, de préférence de 0,15 à 0,7%, en poids du tensioactif bétaïne.

6. Utilisation selon l'une des revendications précédentes, **caractérisée en ce que** la composition comprend de 0,1 à 3%, de préférence de 0,15 à 1,5%, de préférence de 0,2 à 1%, en poids de l'agent moussant.

7. Utilisation selon l'une des revendications précédentes, **caractérisée en ce que**:
- R² et R³ sont des groupes méthyle, et
- R⁴ est le groupe -CH₂-CH₂-CH₂-.

8. Utilisation selon l'une des revendications précédentes, **caractérisée en ce que**:
- R¹ représente un groupe alkyle, linéaire ou branché, saturé ou insaturé, comprenant de 18 atomes de carbone, ou
- R'¹ représente un groupe alkyle, linéaire ou branché, saturé ou insaturé, comprenant de 17 atomes de carbone.

9. Utilisation selon l'une des revendications précédentes, **caractérisée en ce que**:
- le groupe R¹ ou le groupe R'¹ correspondent à un groupe oléyle.

10. Utilisation selon l'une des revendications précédentes, **caractérisée en ce que** l'agent moussant est choisi parmi les alkylsulfates et les alkyle ether sulfates.

11. Utilisation selon l'une des revendications précédentes, **caractérisée en ce que** la composition moussante est:
- une composition comprenant un liant hydraulique,
- une composition pour la fabrication de céramiques,
- un fluide de forage,
- une composition comprenant des composés susceptibles de générer un matériau polymérique éventuellement réticulé,
- une composition de marquage de terrain,
- une composition d'extinction de feux,
- une composition de dépollution des eaux,
- une composition de bain moussant, ou
- une composition détergente.

12. Utilisation selon la revendication 11, **caractérisée en ce que** la composition un liant hydraulique est une composition cimentaire ou une composition de plâtre pour l'obtention d'un matériau poreux et/ou léger et/ou réfractaire et/ou isolant.'

13. Utilisation selon ia revendication 11, **caractérisée en ce que** le fluide de forage et un fluide d'excavation de déblais mis en oeuvre dans des opérations de percement de tunnels.

14. Utilisation selon la revendication 11, **caractérisée en ce que** la composition détergente est une composition de nettoyage à la main dé la vaisselle.

## Patentansprüche

1. Verwendung eines Betain-Tensids, das aus den folgenden ausgewählt ist:
- Alkylbetainen der folgenden Formel (I):
R¹-N⁺R²R³-CH₂-COO^{_} (I)
- Alkylamidoalkylbetainen der folgenden Formel (II):
R'¹-CO-NH-R₄-N⁺R²R³-CH₂-COO⁻ (II)
und
- Mischungen und Kombinationen davon,
wobei:
- R¹ für eine gesättigte oder ungesättigte, lineare oder verzweigte Alkylgruppe mit 16 bis 24 Kohlenstoffatomen steht,
- R'¹ für eine gesättigte oder ungesättigte, lineare oder verzweigte Alkylgruppe mit 15 bis 22 Kohlenstoffatomen steht,
- R⁴ für eine zweiwertige C₁-C₄-Alkylgruppe, die gegebenenfalls durch eine Hydroxylgruppe substituiert ist, steht,
- R² und R³ gleich oder verschieden sind und für eine C₁-C₂-Alkylgruppe, die gegebenenfalls durch eine Hydroxylgruppe substituiert ist, stehen,
in einer schäumenden wässrigen Zusammensetzung, die ein Schäumungsmittel umfasst, als Mittel zur Verringerung der Drainage des Schaums.

2. Verwendung nach Anspruch 1, **dadurch gekennzeichnet, dass** das Gewichtsverhältnis zwischen dem Betain-Tensid und dem Schäumungsmittel größer gleich 0,4, vorzugsweise größer gleich 0,7, vorzugsweise größer gleich 1 und vorzugsweise größer gleich 2 ist.

3. Verwendung nach einem der vorhergehenden Ansprüche, **dadurch gekennzeichnet, dass** das Gewichtsverhältnis zwischen dem Betain-Tensid und dem Schäumungsmittel kleiner gleich 10, vorzugsweise kleiner gleich 5, vorzugsweise kleiner gleich 4 und vorzugsweise kleiner gleich 2 ist.

4. Verwendung nach einem der vorhergehenden Ansprüche, **dadurch gekennzeichnet, dass** die Zusammensetzung 0,05 bis 5 Gew.-%, vorzugsweise 0,1 bis 2 Gew.-%, vorzugsweise 0,15 bis 1,5 Gew.-% und vorzugsweise 0,2 bis 0,7 Gew.-% des Schäumungsmittels und des Betain-Tensids umfasst.

5. Verwendung nach einem der vorhergehenden Ansprüche, **dadurch gekennzeichnet, dass** die Zusammensetzung 0,05 bis 2 Gew.-%, vorzugsweise 0,1 bis 1 Ges.-% und vorzugsweise 0,15 bis 0,7 Gew.-% des Betain-Tensids umfasst.

6. Verwendung nach einem der vorhergehenden Ansprüche, **dadurch gekennzeichnet, dass** die Zusammensetzung 0,1 bis 3 Gew.-%, vorzugsweise 0,15 bis 1,5 Ges.-% und vorzugsweise 0,2 bis 1 Gew.-% des Schäumungsmittels umfasst.

7. Verwendung nach einem der vorhergehenden Ansprüche, **dadurch gekennzeichnet, dass**:
- R² und R³ für Methylgruppen stehen und
- R⁴ für die Gruppe -CH₂-CH₂-CH₂- steht.

8. Verwendung nach einem der vorhergehenden Ansprüche, **dadurch gekennzeichnet, dass**:
- R¹ für eine gesättigte oder ungesättigte, lineare oder verzweigte Alkylgruppe mit 18 Kohlenstoffatomen steht oder
- R'¹ für eine gesättigte oder ungesättigte, lineare oder verzweigte Alkylgruppe mit 17 Kohlenstoffatomen steht.

9. Verwendung nach einem der vorhergehenden Ansprüche, **dadurch gekennzeichnet, dass**:
- die Gruppe R¹ oder die Gruppe R'¹ einer Oleylgruppe entspricht.

10. Verwendung nach einem der vorhergehenden Ansprüche, **dadurch gekennzeichnet, dass** das Schäumungsmittel aus Alkylsulfaten und Alkylethersulfaten ausgewählt ist.

11. Verwendung nach einem der vorhergehenden Ansprüche, **dadurch gekennzeichnet, dass** es sich bei der schäumenden Zusammensetzung um
- eine Zusammensetzung, die ein hydraulisches Bindemittel umfasst,
- eine Zusammensetzung zur Herstellung von Keramiken,
- eine Bohrflüssigkeit,
- eine Zusammensetzung, die Verbindungen umfasst, die zur Bildung eines gegebenenfalls vernetzten Polymermaterials befähigt sind,
- eine Bodenmarkierungszusammensetzung,
- eine Brandlöschzusammensetzung,
- eine Wasserdekontaminierungszusammensetzung,
- eine Schaumbadzusammensetzung oder
- eine Wasch- oder Reinigungsmittelzusammensetzung handelt.

12. Verwendung nach Anspruch 11, **dadurch gekennzeichnet, dass** es sich bei der Zusammensetzung, die ein hydraulisches Bindemittel umfasst, um eine Zementzusammensetzung oder eine Putzzusammensetzung zum Erhalt eines porösen und/oder leichten und/oder feuerfesten und/oder isolierenden Materials handelt.

13. Verwendung nach Anspruch 11, **dadurch gekennzeichnet, dass** es sich bei der Bohrflüssigkeit um eine Flüssigkeit zum Ausheben von Abraum, die bei Tunnelbohrarbeiten eingesetzt wird, handelt.

14. Verwendung nach Anspruch 11, **dadurch gekennzeichnet, dass** es sich bei der Wasch- oder Reinigungsmittelzusammensetzung um eine Zusammensetzung zur manuellen Reinigung von Geschirr handelt.

## Claims

1. Use, in a foaming aqueous composition comprising a foaming agent, as foam drainage reducing agent, of a betaine surfactant chosen from the following:
- alkyl betaines of following formula (I):
R¹-N⁺R²R³-CH₂-COO⁻ (I)
- alkylamidoalkyl betaines of following formula (II):
R'¹-CO-NH-R₄-N⁺R²R³-CH₂-COO⁻ (II),
and
- their mixtures and combinations,
where:
- R¹ represents a saturated or unsaturated and linear or branched alkyl group comprising from 16 to 24 carbon atoms,
- R'¹ represents a saturated or unsaturated and linear or branched alkyl group comprising from 15 to 22 carbon atoms,
- R⁴ represents a divalent C₁-C₄ alkyl group, if appropriate substituted by a hydroxyl group,
- R² and R³, which are identical or different, represent a C₁-C₂ alkyl group, if appropriate substituted by a hydroxyl group.

2. Use according to Claim 1, **characterized in that** the ratio by weight of the betaine surfactant to the foaming agent is greater than or equal to 0.4, preferably 0.7, preferably 1, preferably 2.

3. Use according to either of the preceding claims, **characterized in that** the ratio by weight of the betaine surfactant to the foaming agent is less than or equal to 10, preferably 5, preferably 4, preferably 2.

4. Use according to one of the preceding claims, **characterized in that** the composition comprises from 0.05 to 5% by weight, preferably from 0.1 to 2% by weight, preferably from 0.15 to 1.5% by weight, preferably from 0.2 to 0.7% by weight, of the foaming agent and of the betaine surfactant.

5. Use according to one of the preceding claims, **characterized in that** the composition comprises from 0.05 to 2% by weight, preferably from 0.1 to 1% by weight, preferably from 0.15 to 0.7% by weight, of the betaine surfactant.

6. Use according to one of the preceding claims, **characterized in that** the composition comprises from 0.1 to 3% by weight, preferably from 0.15 to 1.5% by weight, preferably from 0.2 to 1% by weight, of the foaming agent.

7. Use according to one of the preceding claims, **characterized in that**:
- R² and R³ are methyl groups, and
- R⁴ is the -CH₂-CH₂-CH₂- group.

8. Use according to one of the preceding claims, **characterized in that**:
- R¹ represents a saturated or unsaturated and linear or branched alkyl group comprising 18 carbon atoms, or
- R'¹ represents a saturated or unsaturated and linear or branched alkyl group comprising 17 carbon atoms.

9. Use according to one of the preceding claims, **characterized in that**:
- the R¹ group or the R'¹ group corresponds to an oleyl group.

10. Use according to one of the preceding claims, **characterized in that** the foaming agent is chosen from alkyl sulfates and alkyl ether sulfates.

11. Use according to one of the preceding claims, **characterized in that** the foaming composition is:
- a composition comprising a hydraulic binder,
- a composition for the manufacture of ceramics,
- a drilling fluid,
- a composition comprising compounds capable of generating an optionally crosslinked polymeric material,
- a composition for marking a ground surface,
- a composition for extinguishing fires,
- a composition for decontaminating water,
- a foam bath composition, or
- a detergent composition.

12. Use according to Claim 11, **characterized in that** the composition comprising a hydraulic binder is a cement composition or a plaster composition for obtaining a porous and/or light and/or refractory and/or insulating material.

13. Use according to Claim 11, **characterized in that** the drilling fluid is a fluid for the excavation of debris employed in tunnel boring operations.

14. Use according to Claim 11, **characterized in that** the detergent composition is a composition for cleaning dishes by hand.
